# EUROPÄISCHE PATENTSCHRIFT

(11) **EP 0 997 571 B1**
(45) Veröffentlichungstag und Bekanntmachung des Hinweises auf die Patenterteilung: **03.12.2003**
(21) Anmeldenummer: 99117668.6
(22) Anmeldetag: 07.09.1999
(51) Int. Cl.: D06F 58/28

(54) **Verfahren zur Überwachung des Trocknungsluftstroms in einem Haushaltwäschetrockner sowie nach diesem Verfahren arbeitender Haushaltwäschetrockner**
Method for monitoring the drying air in a domestic laundry drier and a domestic laundry drier therefor
Procédé pour surveiller l'air de séchage dans un séchoir à linge domestique et un séchoir à linge domestique utilisant un tel procédé

(30) Priorität: 17.09.1998 DE 19842644
(43) Veröffentlichungstag der Anmeldung: 03.05.2000
(73) Patentinhaber: BSH Bosch und Siemens Hausgeräte GmbH, 81669 München (DE)
(72) Erfinder: Meerpohl, Hansjörg, Dipl.-Ing., 10555 Berlin (DE); Böldt, Frank, Dipl.-Ing., 14656 Brieselang (DE); Pieper, Bodo, Dr.-Ing., 10249 Berlin (DE)

(56) Entgegenhaltungen:
- DE-A- 4 337 735
- DE-A- 19 533 241
- US-A- 5 682 684

## Beschreibung

Die Erfindung betrifft ein Verfahren zum Überwachen der Strömungsgeschwindigkeit eines von einem Gebläse in einem Prozeßluftkanal erzeugten und von einer Heizeinrichtung erwärmten Prozeßluftstroms in einem Haushaltwäschetrockner, bei dem die Temperatur des Prozeßluftstroms an wenigstens einem Ort in Strömungsrichtung hinter der Heizeinrichtung erfaßt wird, sowie einen Haushaltwäschetrockner zur Durchführung dieses Verfahrens.

Bei Haushaltwäschetrocknern wird von einem Gebläse ein Prozeßluftstrom erzeugt, der von einer Heizeinrichtung erwärmt und zu der zu trocknenden Wäsche in einen Wäschetrocknungsraum geleitet wird. Dort nimmt sie Feuchtigkeit der Wäsche auf. Nach dem Austritt aus dem Wäschetrocknungsraum wird der feuchte Prozeßluftstrom bei sogenannten Ablufttrocknern ins Freie geführt. Bei sogenannten Umlufttrocknern dagegen wird der feuchte Prozeßluftstrom durch einen Wärmetauscher geleitet, der die Prozeßluft abkühlt und ihr so durch Kondensation Feuchtigkeit entzieht. Die so getrocknete Luft wird danach wieder dem Gebläse zugeführt.

Für die Trocknung der Wäsche ist jedoch in jedem Fall ein Prozeßluftstrom mit einer bestimmten Strömungsgeschwindigkeit nötig. Falls diese zu gering ist, wird die Wäsche zu langsam beziehungsweise nicht getrocknet. Für die Funktion eines Haushaltwäschetrockners ist es somit wesentlich, daß der Prozeßluftstrom eine bestimmte Strömungsgeschwindigkeit nicht unterschreitet. Dafür können verschiedene Ursachen in Betracht kommen. Beispielsweise durch Ausfall oder Beeinträchtigung der Gebläsefunktion, durch eine Undichtigkeit im Prozeßluftkanal, durch Verlegen des Prozeßluftkanals durch Wäscheflusen oder durch eine übermäßige Füllung des Wäschetrocknungsraums. Zur Vermeidung der Verflusung sind bei Haushaltwäschetrocknern üblicherweise Flusenfilter im Prozeßluftstrom vorgesehen, die sich jedoch im Laufe des Betriebs füllen und dem Prozeßluftstrom einen zunehmenden Strömungswiderstand entgegensetzen.

Aus der DE 43 37 735 A1 ist ein Wäschetrockner bekannt, bei dem die Heizeinrichtung von einem in Strömungsrichtung hinter ihr angeordneten Thermostatschalter mit Hysterese bei einem oberen Wert ausgeschaltet und bei einem unteren Wert eingeschaltet wird. Dabei wird die Zeit zwischen zwei aufeinanderfolgenden Einschalt- oder Ausschaltvorgängen zur Erkennung von Störfällen verwendet. Je größer die Zeit wird, desto langsamer kühlt die Luft ab. Dies kann verschiedene Ursachen haben. Einer der Gründe kann beispielsweise die Verringerung des Prozeßluftstroms insbesondere durch Verflusung des Flusenfilters oder eine Gebläsefehlfunktion sein. Eine andere Ursache für die Verlangsamung des Abkühlvorgangs kann auch die Verringerung der Restfeuchte der zu trocknenden Wäsche sein, da mit der Restfeuchte auch die Verdunstungskälte und damit die Abkühlung der Prozeßluft abnimmt. Die Zeitdauer zwischen zwei Einschalt- oder zwei Ausschaltvorgängen nimmt in diesem Fall ebenfalls zu. Daher ist im Ausführungsbeispiel zur verbesserten Störfallerkennung zusätzlich vorgesehen, die Restfeuchte und die Temperatur der Prozeßluft nach Austritt aus dem Wäschetrocknungsraum zu messen und bei der Störfallerkennung zu berücksichtigen. In diesem Fall ist ein zusätzlicher Temperatursensor und insbesondere ein in der Regel aufwendiger Feuchtesensor nötig, wobei die Druckschrift nicht offenbart, ob die Störfallerkennung auch eine Überwachung des Prozeßluftstroms mit einschließt.

Der vorliegenden Erfindung liegt die Aufgabe zugrunde, ein Verfahren sowie einen Haushaltwäschetrockner der eingangs genannten Art zu schaffen, bei denen der Prozeßluftstrom sicher und unabhängig von Störgrößen bei geringem Bauteileaufwand überwacht werden kann.

Erfindungsgemäß wird diese Aufgabe durch ein Verfahren gelöst, bei dem die Heizleistung der Heizeinrichtung verändert wird, eine dadurch verursachte Temperaturveränderung des Prozeßluftstroms an dem wenigstens einen Ort erfaßt wird, und der Unterschied zwischen den Zeitpunkten, an denen die Temperaturveränderung des Prozeßluftstroms an einem ersten Ort beziehungsweise an einem zweiten Ort erfaßt wird, oder zwischen den Zeitpunkten, an denen die Heizleistung verändert beziehungsweise die Temperaturveränderung des Prozeßluftstroms an einem zweiten Ort erfaßt wird, gemessen und als Maß für die Strömungsgeschwindigkeit des Prozeßluftstroms verwendet wird, sowie durch einen Haushaltwäschetrockner gelöst, der ein Gebläse, eine Heizeinrichtung, wenigstens einen Temperatursensor und eine Steuereinrichtung aufweist, die dazu dient, die Heizeinrichtung veränderlich anzusteuern, das Ausgangssignal des wenigstens einen Temperatursensors zu erfassen, und den Unterschied zwischen den Zeitpunkten, an denen eine Temperaturveränderung des Prozeßluftstroms bei einem ersten beziehungsweise einem zweiten Temperatursensor erfaßt wird, oder zwischen den Zeitpunkten, an denen die Heizleistung verändert beziehungsweise die Temperaturveränderung des Prozeßluftstroms bei einem Temperatursensor am zweiten Ort erfaßt wird, als Maß für die Strömungsgeschwindigkeit des Prozeßluftstroms zu bestimmen.

Der Prozeßluftstrom, dem von der Heizeinrichtung eine Temperaturveränderung aufgeprägt wird, bewegt sich mit seiner Strömungsgeschwindigkeit zu einem von der Heizeinrichtung entfernten zweiten Ort, an dem sich die Temperaturveränderung erst nach einer gewissen Zeit auswirkt, die insbesondere von der Weglänge bis dahin und der Strömungsgeschwindigkeit abhängt. Die Strömungsgeschwindigkeit der Prozeßluft ergibt sich im wesentlichen aus dem Quotienten der Länge einer zurückgelegten Wegstrecke, die durch die Geometrie des Prozeßluftkanals vorgegeben ist, und der dafür benötigten Laufzeit. Im folgenden wird der Ort am Ende der Wegstrecke als zweiter Ort bezeichnet. Der Beginn der betrachteten Wegstrecke kann bei der Heizeinrichtung oder bei einem im folgenden sogenannten ersten Ort liegen. Als Prozeßluftkanal wird im folgenden der Weg bezeichnet, den der Prozeßluftstrom im normalen Betriebsfall im Wäschetrockner nimmt. Dazu können beispielsweise das Gebläse, die Leitungen bis zu einem Wäschetrocknungsraum, der Wäschetrocknungsraum, die Abluftleitung, und ein Wärmetauscher zählen.

Diese Laufzeit des Prozeßluftstroms kann mit zwei Temperatursensoren gemessen werden, die an einem ersten und einem in Strömungsrichtung dahinter liegenden zweiten Ort im Prozeßluftstrom angeordnet sind. Eine Temperaturveränderung des Prozeßluftstroms wird aufgrund der für den Weg dazwischen benötigten Zeit von den Temperatursensoren zeitlich versetzt registriert werden. Aus dem Zeitunterschied, mit den eine Temperaturveränderung bei den beiden Temperatursensoren erfaßt wird, und der Weglänge des Prozeßluftkanals zwischen den Temperatursensoren kann die Strömungsgeschwindigkeit bestimmt werden. Dieser Zeitunterschied und die Strömungsgeschwindigkeit können beispielsweise mittels einer elektronischen Steuereinrichtung bestimmt werden. Vorteilhafterweise werden in diesem Fall Temperatursensoren mit einem im wesentlichen gleichen zeitlichen Ansprechverhalten eingesetzt. Eine gegebenenfalls vorhandene zeitliche Verzögerung bei der Erfassung der Temperaturänderung bei den Temperatursensoren kann auf diese Weise einfach und vollständig kompensiert werden.

Die Laufzeit kann auch bestimmt werden, indem der Zeitunterschied zwischen der Veränderung der Heizleistung und dem Erfassen der dadurch verursachten Temperaturänderung des Prozeßluftstroms an dem zweiten Ort gemessen wird. Vorteilhafterweise wird in diesem Fall nur ein Temperatursensor benötigt. Dabei kann der Zeitpunkt, zu dem die Heizleistung der Heizeinrichtung verändert wurde, in der Regel sehr genau bestimmt werden. Aufgrund der thermischen Trägheit der Heizeinrichtung entsteht jedoch eine Zeitverzögerung bis zur Veränderung der Temperatur des Prozeßluftstroms. Ebenso wird auch in diesem Fall durch ein verzögertes Ansprechen des Temperatursensors am zweiten Ort die Temperaturveränderung dort mit einer gewissen Zeitverzögerung gemessen. Diese Verzögerungen sind jedoch konstruktionsabhängig und konstant. Sie lassen sich daher bei der Auswertung des gemessenen Zeitunterschieds insbesondere mittels einer elektronischen Steuereinrichtung einfach korrigieren.

Wird der Zeitunterschied für eine große Wegstrecke gemessen, ergibt sich eine für die Messung vorteilhafte lange Laufzeit des Prozeßluftstroms, so daß zeitliche Meßfehler beim Erfassen einer Temperaturveränderung weniger ins Gewicht fallen. Wird dagegen eine kleine Wegstrecke gewählt, sind die Auswirkungen des Prozeßluftkanals auf die Temperatur der Prozeßluft gering, so daß die Temperaturveränderung leichter erfaßt werden kann.

Falls trotz Veränderung der Heizleistung an wenigstens einem Ort keine Temperaturveränderung des Prozeßluftstroms erfaßt beziehungsweise registriert werden kann, kann daraus auf einen Störfall geschlossen werden. Ursache dafür kann eine Undichtigkeit im Prozeßluftkanal sein, aufgrund derer der Prozeßluftstrom mit der aufgeprägten Temperaturveränderung an anderer Stelle austritt und nicht wie vorgesehen bei den Temperatursensoren vorbeiströmt. Weitere Ursachen können ein vollständiger Gebläseausfall oder ein vollständiges Verlegen des Prozeßluftkanals sein. Damit läßt sich der ordnungsgemäße Verlauf des Prozeßluftstroms im Prozeßluftkanal zwischen der Heizeinrichtung und einem Temperatursensor oder zwischen mehreren Temperatursensoren kontrollieren.

Der zweite Ort zum Erfassen der Temperaturveränderung des Prozeßluftstroms ist vorteilhafterweise im Prozeßluftkanal in Strömungsrichtung hinter einem Abschnitt mit bekanntermaßen großen Veränderungen der Strömungsgeschwindigkeit gelegen. Dies kann hinter einem Flusenfilter und bei Umlufttrocknern auch hinter dem Wärmetauscher sein. Auf diese Weise können gerade besonders stark gefährdete Bereiche im Prozeßluftkanal auf eine Erhöhung des Strömungswiderstandes hin überwacht werden. Diese Bereiche können der Flusenfilter, ein Wäschetrocknungsraum, der Wärmetauscher oder das Gebläse sein. Der Wäschetrocknungsraum kann beispielsweise durch übermäßige Beladung durch eine Bedienperson verstopft werden, so daß der Strömungswiderstand zu hoch wird. Wird der zweite Ort zum Erfassen der Temperaturveränderung unmittelbar hinter dem Wäschetrocknungsraum angeordnet, kann aus einer Verringerung der Strömungsgeschwindigkeit auf eine zu starke Beladung geschlossen werden und eine Warnung erfolgen.

Wenn der zweite Ort allerdings hinter einer Kette solcher Bereiche liegt, kann bei einer festgestellten Veränderung der Strömungsgeschwindigkeit nur ausgesagt werden, daß die Ursache in einem dieser Bereiche liegt. Entsprechend kann durch eine lange Wegstrecke bis zum zweiten Ort ein möglichst großer Bereich des Prozeßluftkanals überwacht werden, falls die Temperaturmessung am zweiten Ort auch dazu verwendet, bei Nichterfassung einer Temperaturänderung des Prozeßluftstroms auf einen Störfall zu erkennen. Bei Umlufttrocknern kann durch Verlegen des zweiten Ortes hinter den Wärmetauscher dieser ebenfalls auf Undichtigkeiten oder Verstopfen überwacht werden kann. Jedoch können durch die Abkühlung der Prozeßluft im Wärmetauscher die Temperaturveränderungen des Prozeßluftstroms ebenfalls verringert werden. Für eine sichere Erfassung der Temperaturveränderungen kann in diesem Fall die Empfindlichkeit des eingesetzten Temperatursensors oder der daran angeschlossenen Schaltung erhöht werden.

Wenn zur Bestimmung des Zeitunterschiedes die Temperaturveränderung des Prozeßluftstroms an einem ersten und einem zweiten Ort erfaßt wird, sind diese Orte vorteilhafterweise nahe vor beziehungsweise hinter einem Abschnitt des Prozeßluftkanals mit bekanntermaßen großen Veränderungen der Strömungsgeschwindigkeit gelegen. Auf diese Weise kann die Strömungsgeschwindigkeit für diesen Abschnitt allein bestimmt werden und bei Erfassung einer unzulässigen Abweichung der Fehler auf diesem Abschnitt eingegrenzt werden.

Die Heizleistung der Heizeinrichtung kann periodisch verändert werden. Entsprechend wird dem Prozeßluftstrom eine periodische Temperaturveränderung aufgeprägt und liefern die Temperatursensoren ein periodisches Ausgangssignal. Der Zeitunterschied, der als Maß für die Strömungsgeschwindigkeit verwendet wird, entspricht in diesem Fall dem Phasenunterschied zwischen einem der Heizleistung entsprechenden Signal und dem Ausgangssignal eines Temperatursensors oder zwischen den Ausgangssignalen von zwei Temperatursensoren. Dieser kann beispielsweise durch Messung des Zeitunterschieds zwischen den Maxima oder den Minima der zu vergleichenden Signalverläufe gemessen werden. Weiterhin sind für die Bestimmung des Phasenunterschieds in diesem Fall auch kompliziertere Verfahren der Signalverarbeitung denkbar, wie beispielsweise die Bildung der Kreuzkorrelationsfunktion zwischen den Signalen oder die Annäherung der Signale jeweils mit einer Fourierreihe bei anschließender Auswertung der Fourierkoeffizienten. Bei periodischen Veränderungen lassen sich der Phasenunterschied und damit die Strömungsgeschwindigkeit kontinuierlich bestimmen, so daß immer ein aktueller Wert vorliegt.

Vorteilhafterweise ist die Dauer der Periode, mit der die Heizleistung verändert wird, lang im Vergleich zur Zeitdauer, die der Prozeßluftstrom von der Heizeinrichtung beziehungsweise von dem ersten Ort bis zum zweiten Ort benötigt. Damit können Mehrdeutigkeiten ausgeschlossen werden, die entstehen können, wenn die einzelnen Schwingungen eines Signalverlaufs schlecht voneinander zu unterscheiden sind. In diesem Fall kann es schwierig sein, die einzelnen Schwingungen der beiden zu vergleichenden periodischen Signale einander zuzuordnen und den Phasenunterschied zu bestimmen. Durch eine vergleichsweise lange Periodendauer wird sichergestellt, daß eine am zweiten Ort zu einem bestimmten Zeitpunkt registrierte Temperaturveränderung der unmittelbar davor erfolgten Heizleistungsveränderung beziehungsweise der unmittelbar davor am ersten Ort registrierten Temperaturveränderung entspricht.

Zur Vermeidung solcher Mehrdeutigkeiten kann die Heizleistung auch nach einem unregelmäßigen Muster verändert werden. Als Muster kann ein in der elektronischen Steuereinrichtung gespeichertes Zufallssignal verwendet werden, das sich lange Zeit nicht wiederholt. Zum Bestimmen des Zeitunterschieds zwischen zwei zeitverschobenen unregelmäßigen Mustern kann die Kreuzkorrelationsfunktion zwischen ihnen gebildet werden.

Bei Umlufttrocknern, bei denen der Prozeßluftstrom durch einen Wärmetauscher zum Abscheiden von Feuchtigkeit geführt wird, kann weiterhin die Temperatur des Prozeßluftstroms vor Eintritt in den Wärmetauscher und nach Austritt aus dem Wärmetauscher erfaßt werden, wobei der Unterschied der beiden Temperaturen als Maß für den Wärmeübergang des Wärmetauschers und der Zeitversatz der Temperaturveränderung bei den beiden Temperaturen als Maß für die Strömungsgeschwindigkeit verwendet wird. Zweck des Wärmetauschers ist es, die Prozeßluft abzukühlen, damit die Feuchtigkeit kondensiert und die Prozeßluft dadurch getrocknet wird. Durch Verflusung kann der Wärmeübergang im Wärmetauscher und damit dessen Funktion beeinträchtigt werden. Dies äußert sich auch darin, daß die Prozeßluft schwächer abgekühlt wird. Diese verringerte Abkühlung kann durch die Messung des Temperaturunterschieds mit den zwei Temperatursensoren vor und nach dem Wärmetauscher gemessen werden.Falls für die Messung des Wärmeübergangs oder der Strömungsgeschwindigkeit ohnehin Temperatursensoren vor beziehungsweise hinter dem Wärmetauscher vorgesehen sind, kann auf diese Weise ohne zusätzlichen Bauteileaufwand die andere Größe zusätzlich gemessen werden.

Weitere Einzelheiten, Merkmale und Vorteile der Erfindung ergeben sich aus der folgenden Beschreibung zweier Ausführungsbeispiele unter Bezugnahme auf die Zeichnungen. Darin zeigen
- Fig. 1: einen schematischen Seitendurchblick durch einen erfindungsgemäß ausgestatteten Ablufttrockner,
- Fig. 2: einen schematischen Seitendurchblick durch einen erfindungsgemäß ausgestatteten Umlufttrockner,
- Fig. 3: die schematischen Verläufe der Heizleistung und der Ausgangssignale der zwei Temperatursensoren bei dem Wäschetrockner aus Fig. 1 und
- Fig. 4: die schematischen Verläufe der Ausgangssignale der drei Temperatursensoren bei dem Wäschetrockner aus Fig. 2.

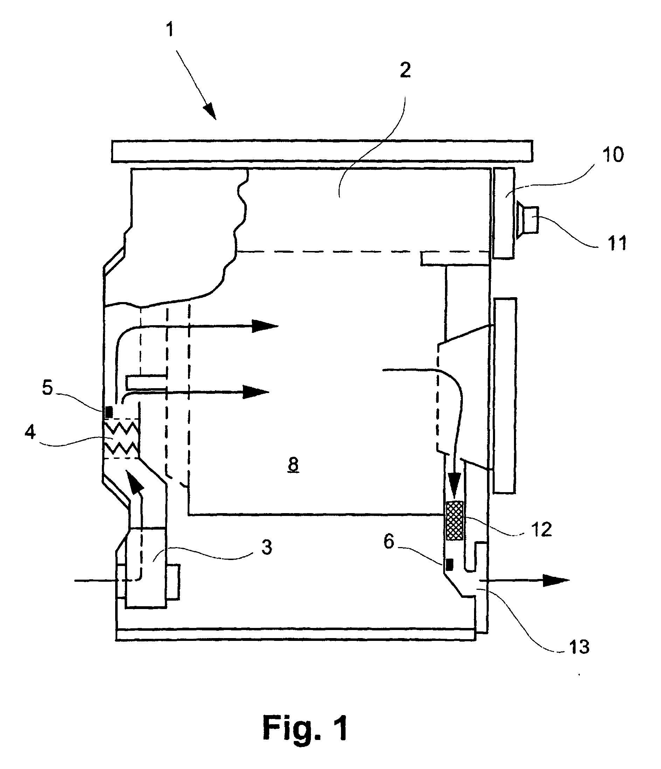

Fig. 1 zeigt schematisch einen Ablufttrockner 1, der im oberen Teil eine elektronische Steuereinrichtung 2 aufweist. Rechts davon ist eine Bedienblende 10 mit einem Bedienelement 11 angeordnet. Im Inneren des Ablufttrockners 1 ist ein Wäschetrocknungsraum 8 für die Aufnahme der zu trocknenden Wäsche angeordnet. Die Prozeßluft wird von einem Gebläse 3 durch den Prozeßluftkanal und eine Heizeinrichtung 4 geblasen, die von der Steuereinrichtung 2 veränderlich angesteuert werden kann. Unmittelbar hinter der Heizeinrichtung 4 ist im Prozeßluftstrom ein Temperatursensor 5 angeordnet, der mit der Steuereinrichtung 2 verbunden ist. Der Prozeßluftstrom, der in den Zeichnungen durch Pfeile signalisiert ist, wird hinter dem Temperatursensor 5 in den Wäschetrocknungsraum 8 geleitet, den er auf der gegenüberliegenden Seite verläßt. Dort durchströmt der Prozeßluftstrom einen Flusenfilter 12 und wird durch einen Luftauslaß 13 ins Freie geleitet. Hinter dem Flusenfilter 12 ist ein weiterer Temperatursensor 6 angeordnet, der ebenfalls mit der Steuereinrichtung 2 verbunden ist.

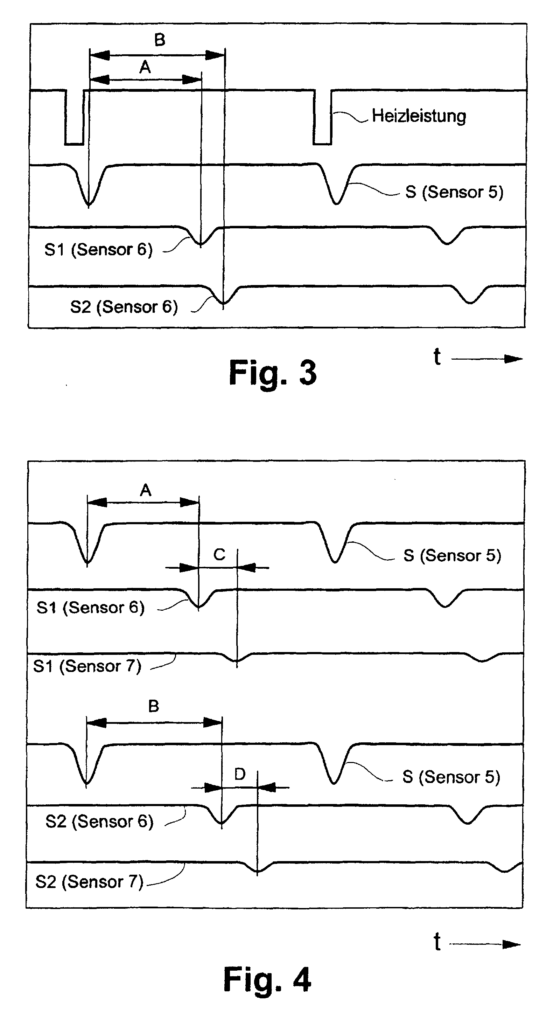

In Fig. 3 ist für den Wäschetrockner 1 aus Fig. 1 der zeitliche Verlauf der Heizleistung und der Ausgangssignale der Temperatursensoren 5 und 6 dargestellt. Dabei ist der Verlauf des Signals des Temperatursensors 6 für den normalen Betrieb (Signal S1) und für den Fall einer Verlegung des Prozeßluftkanals (Signal S2) angegeben.

Die Heizeinrichtung 4 wird von der Steuereinrichtung 2 in regelmäßigen Abständen kurz ausgeschaltet, so daß im Heizleistungsverlauf in der obersten Kurve in Fig. 3 kurz andauernde Unterbrechungen auftreten. Diese führen zu kurzzeitigen Temperaturabsenkungen der Prozeßluft, die mit dem Temperatursensor 5 erfaßt werden. Da der Prozeßluftstrom von der Heizeinrichtung 4 bis zum Sensor 5 eine gewisse Zeit benötigt, treten dort die Temperaturabsenkungen zeitlich verzögert auf. Diese Zeitverzögerung ist allerdings wegen der geringen Entfernung sehr gering. Der Signalverlauf S1 (Sensor 6) gibt den Temperaturverlauf bei dem Temperatursensor 6 für den normalen Betrieb wieder. Dabei tritt bei der Erfassung der Temperaturveränderung mit den Temperatursensoren 5 und 6 ein Zeitunterschied A auf, der unter anderem von der Wegstrecke zwischen den Temperatursensoren 5 und 6 und der Strömungsgeschwindigkeit des Prozeßluftstroms abhängt. Die Temperatursensoren 5 und 6 besitzen das gleiche Ansprechverhalten, um eine zeitliche Verzögerung beim Erfassen der Temperatur zu kompensieren. Wird der Prozeßluftstrom gehemmt, beispielsweise .durch ein Verlegen des Flusenfilters 12, nimmt die Strömungsgeschwindigkeit ab und der Zeitunterschied zu. In diesem Fall wird mit dem Temperatursensor 6 der Verlauf S2 (Sensor 6) und der größere Zeitunterschied B gemessen. Die Steuereinrichtung 2 kann daher aufgrund des Zeitunterschieds die Strömungsgeschwindigkeit bestimmen und dadurch mittelbar den Prozeßluftstrom überwachen.

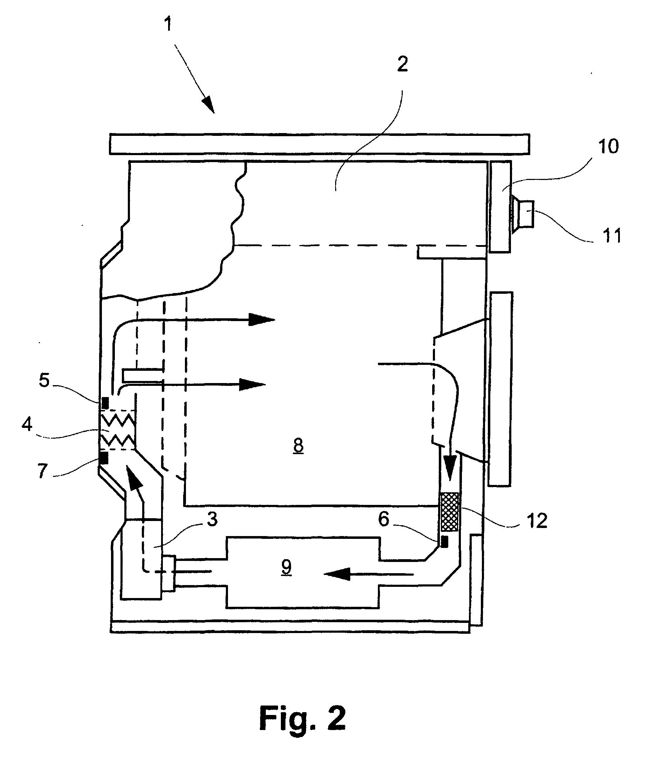

In Fig. 2 ist schematisch als zweites Ausführungsbeispiel ein Umlufttrockner 1 dargestellt. Der Unterschied zum Ablufttrockner aus Fig. 1 besteht darin, daß die Prozeßluft nach dem Flusenfilter 12 durch einen Wärmetauscher 9 geleitet und danach wieder dem Gebläse 3 zugeführt wird. In dem Wärmetauscher 9 wird der feuchte Prozeßluftstrom abgekühlt, wobei die Feuchtigkeit kondensiert und der Prozeßluftstrom getrocknet wird. Bei dem Umlufttrockner 1 ist zusätzlich ein mit der Steuereinrichtung 2 verbundener Temperatursensor 7 zwischen dem Wärmetauscher 9 und der Heizeinrichtung 4 vorgesehen. Die Heizeinrichtung wird in diesem Fall wie beim Wäschetrockern aus Fig. 1 in regelmäßigen Abständen kurz ausgeschaltet.

In Fig. 4 ist für den Umlufttrockner 1 aus Fig. 2 der zeitliche Verlauf der Ausgangssignale der Temperatursensoren 5 bis 7 angegeben. Der Verlauf der Heizleistung entspricht dem in Fig. 3 und ist in Fig. 4 nicht dargestellt. Die Signalverläufe S (Sensor 5), S1 (Sensor 6) und S2 (Sensor 6) entsprechen denen in Fig. 3. Das Ausgangssignal des Temperatursensors 7 ist für den normalen Betriebsfall durch den Signalverlauf S1 (Sensor 7) und für den Fall eines Verlegens des Flusenfilters 12 durch den Signalverlauf S2 (Sensor 7) wiedergegeben. Da zwischen den Temperatursensoren 6 und 7 eine zusätzliche Wegstrecke liegt, tritt zwischen den Ausgangssignalen dieser Sensoren eine weitere Zeitverzögerung C, D auf. Die für die Bestimmung der Strömungsgeschwindigkeit herangezogene Zeitunterschiede A beziehungsweise B werden wie im vorigen Fall zwischen der Erfassung der Temperaturveränderung bei den Temperatursensoren 5 und 6 und damit für den Abschnitt des Prozeßluftkanals zwischen diesen Temperatursensoren gemessen.

Zusätzlich wird in diesem Beispiel die Temperatur bei den Sensoren 6 und 7 ausgewertet. Durch Messung der Zeitunterschiede C und D, mit dem die Veränderungen bei den beiden Temperaturen auftritt, wird gemäß des erfindungsgemäßen Verfahrens die Strömungsgeschwindigkeit im Wärmetauscher 9 erfaßt. Weiterhin herrscht im Normalfall bei einer ordnungsgemäßen Luftströmung zwischen diesen Temperaturen ein bestimmter Unterschied, der auf einen ordnungsgemäßen Wärmeübergang im Wärmetauscher 9 hinweist. Dieser Unterschied kann unter Berücksichtigung der Strömungsgeschwindigkeit des Prozeßluftstroms, die in diesem Beispiel durch Auswertung des Zeitunterschieds bereits bekannt ist, herangezogen werden, um eine Störung im Wärmetauscher 9 zu erkennen. Bei Vorliegen eines ordnungsgemäßen Temperaturunterschieds kann im allgemeinen von einer ordnungsgemäßen Funktion des Wärmetauschers 9 ausgegangen werden.

In den beiden Ausführungsbeispielen in Fig. 1 und Fig. 2 überwacht die Steuereinrichtung 2 auch, ob bei einer Veränderung der Heizleistung der Heizeinrichtung 4 auch tatsächlich eine Temperaturveränderung bei allen Temperatursensoren 5 und 6 oder 5 bis 7 registriert werden kann. Anderenfalls kann dies auch als Hinweis auf ein Verstopfen des Prozeßluftkanals oder eine Entweichen der Prozeßluft dienen. In einem solchen Fall kann die Steuereinrichtung ein Alarmsignal auslösen.

## Patentansprüche

1. Verfahren zum Überwachen der Strömungsgeschwindigkeit eines von einem Gebläse (3) in einem Prozeßluftkanal erzeugten und von einer Heizeinrichtung (4) erwärmten Prozeßluftstroms in einem Haushaltwäschetrockner (1), bei dem die Temperatur des Prozeßluftstroms an wenigstens einem Ort in Strömungsrichtung hinter der Heizeinrichtung (4) erfaßt wird, **dadurch gekennzeichnet, daß**
- die Heizleistung der Heizeinrichtung (4) verändert wird,
- eine dadurch verursachte Temperaturveränderung des Prozeßluftstroms an dem wenigstens einen Ort erfaßt wird, und
- der Unterschied zwischen den Zeitpunkten, an denen die Temperaturveränderung des Prozeßluftstroms an einem ersten Ort beziehungsweise an einem zweiten Ort erfaßt wird, oder zwischen den Zeitpunkten, an denen die Heizleistung verändert beziehungsweise die Temperaturveränderung des Prozeßluftstroms an einem zweiten Ort erfaßt wird, gemessen und als Maß für die Strömungsgeschwindigkeit des Prozeßluftstroms verwendet wird.

2. Verfahren nach Anspruch 1, **dadurch gekennzeichnet, daß** der zweite Ort zum Erfassen der Temperaturveränderung des Prozeßluftstroms in Strömungsrichtung hinter einem Abschnitt des Prozeßluftkanals mit bekanntermaßen großen Veränderungen der Strömungsgeschwindigkeit gelegen ist.

3. Verfahren nach Anspruch 1 oder 2, **dadurch gekennzeichnet, daß** die Temperaturveränderung des Prozeßluftstroms an einem ersten Ort und einem zweiten Ort erfaßt wird, und diese Orte in Strömungsrichtung nahe vor beziehungsweise hinter einem Abschnitt des Prozeßluftkanals mit bekanntermaßen großen Veränderungen der Strömungsgeschwindigkeit gelegen sind.

4. Verfahren nach Anspruch 2 oder 3, **dadurch gekennzeichnet, daß** der Abschnitt des Prozeßluftkanals mit bekanntermaßen großen Veränderungen der Strömungsgeschwindigkeit einen Flusenfilter (12) und/oder einen Wäschetrocknungsraum (8) und/oder einen Wärmetauscher (9) und/oder ein Gebläse (3) beinhalten.

5. Verfahren nach einem der Ansprüche 1 bis 4, **dadurch gekennzeichnet, daß** die Heizleistung der Heizeinrichtung (4) periodisch verändert wird.

6. Verfahren nach Anspruch 5, **dadurch gekennzeichnet, daß** die Dauer der Periode, mit der die Heizleistung verändert wird, lang ist im Vergleich zur Zeitdauer, die der Prozeßluftstrom von der Heizeinrichtung (4) beziehungsweise von dem ersten Ort bis zum zweiten Ort benötigt.

7. Verfahren nach einem der Ansprüche 1 bis 4, **dadurch gekennzeichnet, daß** die Heizleistung nach einem unregelmäßigen Muster verändert wird.

8. Verfahren nach einem der Ansprüche 1 bis 7, **dadurch gekennzeichnet, daß** in den Fällen, in denen trotz Veränderung der Heizleistung an wenigstens einem Ort keine Temperaturveränderung des Prozeßluftstroms erfaßt werden kann, auf einen Störfall erkannt wird.

9. Verfahren nach einem der Ansprüche 1 bis 8, **dadurch gekennzeichnet, daß** der Prozeßluftstrom in dem Haushaltwäschetrockner (1) durch einen Wärmetauscher (9) zum Abscheiden von Feuchtigkeit geführt wird, die Temperatur des Prozeßluftstroms vor Eintritt in und nach Austritt aus dem Wärmetauscher (9) erfaßt wird, der Zeitunterscheid, mit dem eine Veränderung bei den beiden Temperaturen auftritt, als Maß für den Strömungsgeschwindigkeitsverlust im Wärmetauscher (9) und der Unterschied der beiden Temperaturen als Maß für den Wärmeübergang im Wärmetauscher (9) verwendet wird.

10. Haushaltwäschetrockner (1) zur Durchführung eines Verfahrens nach einem der Ansprüche 1 bis 8, welcher ein Gebläse (3), eine Heizeinrichtung (4), wenigstens einen Temperatursensor (5, 6, 7) und eine Steuereinrichtung (2) aufweist, die dazu dient, die Heizeinrichtung (4) veränderlich anzusteuern, das Ausgangssignals des wenigstens einen Temperatursensors (5, 6, 7) zu erfassen, und den Unterschied zwischen den Zeitpunkten, an denen eine Temperaturveränderung des Prozeßluftstroms bei einem ersten (5) beziehungsweise einem zweiten Temperatursensor (6, 7) erfaßt wird, oder zwischen den Zeitpunkten, an denen die Heizleistung verändert beziehungsweise die Temperaturveränderung des Prozeßluftstroms bei einem Temperatursensor (6, 7) am zweiten Ort erfaßt wird, als Maß für die Strömungsgeschwindigkeit des Prozeßluftstroms zu bestimmen.

11. Haushaltwäschetrockner nach Anspruch 10, **dadurch gekennzeichnet, daß** ein erster Temperatursensor (5) unmittelbar hinter der Heizeinrichtung (4) angeordnet ist.

12. Haushaltwäschetrockner nach Anspruch 10 oder 11, **dadurch gekennzeichnet, daß** der Prozeßluftstrom nach Durchtritt durch einen Wäschetrocknungsraum (8) durch einen Flusenfilter (12) geleitet wird und der Temperatursensor (6) an dem zweiten Ort unmittelbar hinter dem Flusenfilter (12) angeordnet ist.

13. Haushaltwäschetrockner nach Anspruch 10 oder 11, **dadurch gekennzeichnet, daß** der Prozeßluftstrom nach Durchtritt durch einen Wäschetrocknungsraum (8) über einen Flusenfilter (12) durch einen Wärmetauscher (9) wieder zur Heizeinrichtung (4) geleitet wird und der Temperatursensor (7) am zweiten Ort hinter dem Wärmetauscher (9) angeordnet ist.

14. Haushaltwäschetrockner nach einem der Ansprüche 10 bis 12 und zur Durchführung des Verfahrens nach Anspruch 9, **dadurch gekennzeichnet, daß** der Prozeßluftstrom nach Durchtritt durch einen Wäschetrocknungsraum (8) über einen Flusenfilter (12) durch einen Wärmetauscher (9) wieder zur Heizeinrichtung (4) geleitet wird, der Temperatursensor (6) am zweiten Ort zwischen dem Flusenfilter (12) und dem Wärmetauscher (9) und ein weiterer Temperatursensor (7) hinter dem Wärmetauscher (9) angeordnet ist, die Steuereinrichtung (2) die Temperaturen bei dem Temperatursensor (6) vor dem Wärmetauscher (9) und dem Temperatursensor (7) hinter dem Wärmetauscher (9) bestimmt und den Zeitunterscheid, mit dem eine Veränderung bei den beiden Temperaturen auftritt, als Maß für den Strömungsgeschwindigkeitsverlust im Wärmetauscher (9) und den Unterschied der beiden Temperaturen als Maß für den Wärmeübergang im Wärmetauscher (9) verwendet.

15. Haushaltwäschetrockner nach einem der Ansprüche 10 bis 14, **dadurch gekennzeichnet, daß** die zwei Temperatursensoren (5, 6 oder 5, 7), deren Ausgangssignale zum Bestimmen des Zeitunterschieds zwischen dem Erfassen einer Temperaturänderung an zwei Orten verwendet werden, im wesentlichen das gleiche zeitliche Ansprechverhalten besitzen.

## Claims

1. Method of monitoring the flow speed of a process air flow, which is produced by a fan (3) in a process air channel and is heated by a heating device (4), in a domestic laundry drier (1 ), in which the temperature of the process air flow is detected at at least one location behind the heating device (4) in flow direction, **characterised in that**
- the heat output of the heating device (4) is varied,
- a thereby-caused temperature change in the process air flow is detected at the at least one location and
- the difference between the instants at which the temperature change in the process air flow at a first location and at a second location is detected or between the instants at which the heat output is changed and the temperature change in the process air flow is detected at a second location, is measured and used as a measure for the flow speed of the process air flow.

2. Method according to claim 1, **characterised in that** the second location for detection of the temperature change in the process air flow is disposed in flow direction behind a section of the process air channel known to have large changes in the flow speed.

3. Method according to claim 1 or 2, **characterised in that** the temperature change in the process air flow is detected at a first location and a second location and these locations are disposed in flow direction closely in front of and behind, respectively, a section of the process air channel known to have large changes in the flow speed.

4. Method according to claim 2 or 3, **characterised in that** the section of the process channel known to have large changes in the flow speed contains a lint filter (12) and/or a laundry drying space (8) and/or a heat exchanger (9) and/or a fan (3).

5. Method according to one of claims 1 to 4, **characterised in that** the heat output of the heating device (4) is periodically varied.

6. Method according to claim 5, **characterised in that** the duration of the period by which the heat output is varied is long by comparison with the time period which the process air flow needs from the heating device (4), or from the first location, to the second location.

7. Method according to one of claims 1 to 4, **characterised in that** the heat output is varied in accordance with an irregular pattern.

8. Method according to one of claims 1 to 7, **characterised in that** in cases in which no temperature change in the process air flow can be detected at at least one location notwithstanding change in the heat output, a fault case is recognised.

9. Method according to one of claims 1 to 8, **characterised in that** the process air flow in the domestic laundry drier (1) is led through a heat exchanger (9) for separation of moisture, the temperature of the process air flow is detected before entry into and after exit from the heat exchanger (9), the time difference by which a change in the two temperatures occurs is used as a measure for the loss in flow speed in the heat exchanger (9) and the difference of the two temperatures is used as a measure for the heat transfer in the heat exchanger (9).

10. Domestic laundry drier (1) for carrying out a method according to one of claims 1 to 8, which comprises a fan (3), a heating device (4), at least one temperature sensor (5, 6, 7) and a control device (2), which serves the purpose of variably controlling the heating device (4), of detecting the output signal of the at least one temperature sensor (5, 6, 7) and of determining the difference between the time instants at which a temperature change in the process air flow at a first temperature sensor (5) and a second temperature sensor (6, 7) is detected, or between the time instants at which the heat output is changed and the temperature change in the process air flow is detected at a temperature sensor (6, 7) at the second location, as a measure for the flow speed of the process air flow.

11. Domestic laundry drier according to claim 10, **characterised in that** a first temperature sensor (4) is arranged directly behind the heating device (4).

12. Domestic laundry drier according to claim 10 or 11, **characterised in that** the process air flow after passage through a laundry drying space (8) is conducted through a lint filter (12) and the second temperature sensor (6) is arranged at the second location directly behind the lint filter (12).

13. Domestic laundry drier according to claim 10 or 11, **characterised in that** the process air flow after passage through a laundry drying space (8) is conducted by way of a lint filter (12) through a heat exchanger (9) back to the heating device (4) and the temperature sensor (7) is arranged at the second location behind the heat exchanger (9).

14. Domestic laundry drier according to one of claims 10 to 12 and for performance of the method according to claim 9, **characterised in that** the process air flow after passage through a laundry drying space (8) is conducted by way of a lint filter (12) through a heat exchanger (9) back to the heating device (4), the temperature sensor (6) is arranged at the second location between the lint filter (12) and the heat exchanger (9) and a further temperature sensor (7) is arranged behind the heat exchanger (9), the control device (2) determines the temperatures at the temperature sensor (9) in front of the heat exchanger (9) and the temperature sensor (7) behind the heat exchanger (9) and the difference in time at which a change in the two temperatures occurs is used as a measure for the flow speed loss in the heat exchanger (9) and the difference of the two temperatures is used as a measure for the heat transfer in the heat exchanger (9).

15. Domestic laundry drier according to one of claims 10 to 14, **characterised in that** the two temperature sensors (5, 6 or 5, 7), the output signals of which are used for determining the difference in time between the detection of a temperature change at two locations, have substantially the same time response behaviour.

## Revendications

1. Procédé pour surveiller la vitesse d'écoulement d'un flux d'air de process produit par un ventilateur (3) dans un canal d'air de process et réchauffé par un dispositif de chauffage (4) dans un séchoir à linge domestique (1), dans lequel la température dudit flux d'air de process est détectée à au moins un endroit, dans le sens d'écoulement derrière le dispositif de chauffage (4), **caractérisé en ce que**
- la puissance de chauffe du dispositif de chauffage (4) est modifiée,
- une modification de température ainsi provoquée du flux d'air de process est détectée audit au moins un endroit et
- la différence entre les instants auxquels la modification de température du flux d'air de process est détectée à un premier endroit resp. à un deuxième endroit, ou entre les instants auxquels la puissance de chauffe est modifiée resp. la modification de température du flux d'air de process est détectée à un deuxième endroit, est mesurée et utilisée comme mesure pour la vitesse d'écoulement du flux d'air de process.

2. Procédé selon la revendication 1, **caractérisé en ce que** le deuxième endroit pour détecter la modification de température du flux d'air de process est situé dans le sens d'écoulement derrière une portion du canal d'air de process avec, comme on sait, d'importantes modifications de la vitesse d'écoulement.

3. Procédé selon la revendication 1 ou 2, **caractérisé en ce que** la modification de température du flux d'air de process est détectée à un premier endroit et un deuxième endroit et **en ce que** ces endroits sont situés dans le sens d'écoulement non loin devant resp. derrière une portion du canal d'air de process avec, comme on sait, d'importantes modifications de la vitesse d'écoulement.

4. Procédé selon la revendication 2 ou 3, **caractérisé en ce que** la portion du canal d'air de process avec, comme on sait, d'importantes modifications de la vitesse d'écoulement, comprend un filtre à peluches (12) et/ou une enceinte de séchage du linge (8) et/ou un échangeur de chaleur (9) et/ou un ventilateur (3).

5. Procédé selon l'une des revendications 1 à 4, **caractérisé en ce que** la puissance de chauffe du dispositif de chauffage (4) est périodiquement modifiée.

6. Procédé selon la revendication 5, **caractérisé en ce que** la durée de la période pour modifier la puissance de chauffe est longue par rapport à la durée que nécessite le flux d'air de process pour aller du dispositif de chauffage (4) resp. du premier endroit jusqu'au deuxième endroit.

7. Procédé selon l'une des revendications 1 à 4, **caractérisé en ce que** la puissance de chauffe est modifiée selon un modèle irrégulier.

8. Procédé selon l'une des revendications 1 à 7, **caractérisé en ce que** dans les cas où malgré une modification de la puissance de chauffe aucune modification de température du flux d'air de process ne peut être détectée à au moins un endroit, il est conclu à une anomalie.

9. Procédé selon l'une des revendications 1 à 8, **caractérisé en ce que** le flux d'air de process dans le séchoir à linge domestique (1) est conduit à travers un échangeur de chaleur (9) pour extraire l'humidité, la température du flux d'air de process est détectée a vant entrée dans et après sortie de l'échangeur de chaleur (9), la différence de temps avec laquelle intervient une modification dans les deux températures est utilisée comme mesure pour la perte de vitesse d'écoulement dans l'échangeur de chaleur (9) et la différence des deux températures est utilisée comme mesure pour le transfert de chaleur dans l'échangeur de chaleur (9).

10. Séchoir à linge domestique (1) pour la mise en oeuvre d'un procédé selon l'une des revendications 1 à 8, comprenant un ventilateur (3), un dispositif de chauffage (4), au moins un capteur de température (5, 6, 7) et un dispositif de commande (2) lequel sert à commander le dispositif de chauffage (4) de manière variable, à détecter le signal de sortie dudit au moins un capteur de température (5, 6, 7) et à définir comme mesure pour la vitesse d'écoulement du flux d'air de process la différence entre les instants auxquels une modification de température du flux d'air de process est détectée au niveau d'un premier (5) resp. d'un deuxième capteur de température (6, 7), ou entre les instants auxquels la puissance de chauffe est modifiée resp. la modification de température du flux d'air de process est détectée au niveau d'un capteur de température (6, 7) au deuxième endroit.

11. Séchoir à linge domestique selon la revendication 10, **caractérisé en ce qu'**un premier capteur de température (5) est agencé immédiatement derrière le dispositif de chauffage (4).

12. Séchoir à linge domestique selon la revendication 10 ou 11, **caractérisé en ce que** le flux d'air de process, après avoir traversé une enceinte de séchage du linge (8), est conduit à travers un filtre à peluches (12) et **en ce que** le capteur de température (6) au deuxième endroit est agencé immédiatement derrière ledit filtre à peluches (6).

13. Séchoir à linge domestique selon la revendication 10 ou 11, **caractérisé en ce que** le flux d'air de process, après avoir traversé une enceinte de séchage du linge (8), est reconduit via un filtre à peluches (12) à travers un échangeur de chaleur (9) au dispositif de chauffage (4) et **en ce que** le capteur de température (7) au deuxième endroit est agencé immédiatement derrière ledit échangeur de chaleur (9).

14. Séchoir à linge domestique selon l'une des revendications 10 à 12 et pour la mise en oeuvre du procédé selon la revendication 9, **caractérisé en ce que** le flux d'air de process, après avoir traversé une enceinte de séchage du linge (8), est reconduit via un filtre à peluches (12) à travers un échangeur de chaleur (9) au dispositif de chauffage (4), **en ce que** le capteur de température (6) au deuxième endroit est agencé entre le filtre à peluches (12) et l'échangeur de chaleur (9) et qu'un autre capteur de température (7) est agencé derrière l'échangeur de chaleur (9), **en ce que** le dispositif de commande (2) détermine les températures au niveau du capteur de température (6) devant l'échangeur de chaleur (9) et au niveau du capteur de température (7) derrière l'échangeur de chaleur (9) et utilise la différence de temps avec laquelle intervient une modification dans les deux températures comme mesure pour la perte de vitesse d'écoulement dans l'échangeur de chaleur (9) et la différence des deux températures comme mesure pour le transfert de chaleur dans l'échangeur de chaleur (9).

15. Séchoir à linge domestique selon l'une des revendications 10 à 14, **caractérisé en ce que** les deux capteurs de température (5, 6 ou 5,7), dont les signaux de sortie sont utilisés pour déterminer la différence de temps entre la détection d'une modification de température à deux endroits, possèdent sensiblement le même mode de réponse dans le temps.
